# EUROPEAN PATENT APPLICATION

(11) **EP 3 037 710 A1**
(43) Date of publication of application: **29.06.2016**
(21) Application number: 15002396.8
(22) Date of filing: 12.08.2015
(51) Int. Cl.: F16M 11/32, F16M 11/14

(54) **A CENTRAL POST REVERSION DEVICE FOR A TRIPOD**

(30) Priority: 25.12.2014 CN 201420844254 U
(71) Applicant: Foshan Nanhai Chevan Optical Electronics Co., Ltd, Guangdong (CN)
(72) Inventor: LEE, LI-WHA, Guangdong (CN)
(74) Representative: Samson & Partner Patentanwälte mbB

(57) **Abstract**

The present application discloses a central post reversion device for a tripod, including a upper protective cap, a lower protective cap, a left spherical shell and a right spherical shell and a central post finger used to telescope the central post; the upper protective cap is fixed on the lower protective cap to form, with the lower protective cap, a spherical receiving cavity with opening; the left spherical shell and the right spherical shell are placed into the spherical receiving cavity symmetrically; the central post finger is placed between and fixed by the left spherical shell and the right spherical shell. In the present utility mode, the central post finger is fixed by the left spherical shell and the right spherical shell in the spherical receiving cavity formed by the upper protective cap and the lower protective cap, when the central post is pulled in the central post finger to its end, under the circumstance that the whole central post is not necessary to be pulled out, the central post swings in the vertical direction at 180 degrees, which places the central post at the lower end of the tripod, easy to retract; at the same time, since the central post can be rotated, the photographer can take photos at a low angle or a close distance, improving quality of photographing.

## Description

### TECHNICAL FIELD

The present application relates to a central post reversion device for a tripod, which falls into the technical field of accessories for photographic equipments.

### BACKGROUND

In the prior art, when the tripod for photography is collapsed, the central post elements can only be placed at the most top of the protective cap of the tripod vertically, or only the three legs are reversed to collapse to the smallest size, which is not convenient to carry; at the same time, when the tripod is used for taking a photo at a lower angle or a close distance, it is very inconvenient to operate, which cannot reach to take photo at the lowest angle or the closest distance, affecting the effect of photographing.

### SUMMARY

The present application, in order to conquer the shortcomings in the prior art, provide a central post reversion device for a tripod that can be rotated in the vertical direction at 180 degrees.

The present application is realized by adopting the following technical solutions:
A central post reversion device for a tripod comprises a upper protective cap, a lower protective cap, a left spherical shell, a right spherical shell and a central post finger used to telescope the central post; the upper protective cap is fixed on the lower protective cap to form, with the lower protective cap, a spherical receiving cavity with an opening; the left spherical shell and the right spherical shell are placed in the spherical receiving cavity symmetrically; the central post finger is placed between and fixed by the left spherical shell and the right spherical shell.

Preferably, the central post reversion device for a tripod also comprises a locking structure that is fixed on the upper protective cap, with one end thereof being pressed against the left spherical shell or the right spherical shell; the central post is fixed by the locking structure, so that the central post cannot be pulled easily from the central post finger; the specific structure thereof is as following: the locking structure comprises a knob and a central post compact; the central post compact is placed between the upper protective cap and the left spherical shell or the right spherical shell, and is pressed on the side of the left spherical shell or the right spherical shell; the knob passes through the upper protective cap and is pressed on the central post compact; the knob is turned to adjust the force of the central post compact upon the left spherical shell or the right spherical shell to clamp or loosen the central post finger, so as to realize the fixing of the central post in the central post finger.

Preferably, the central post reversion device for a tripod further comprises a limiting structure that is installed at the bottom of the central post, which can prevent the drawing out of the central post from the central post finger; the specific structure thereof is as following: the limiting structure comprises a tail block, an elastic bean and an elastic member; the tail block is fixed at the bottom of the central post; the tail block is arranged with a slot hole horizontally in it; the elastic member is placed in the slot hole; the elastic bean is stuck at the opening of the slot hole and is connected with the outer end of the elastic member; because the elastic bean is stuck at the opening of the slot hole under the force of the elastic member, when the central post is pulled from the central post finger to the end, it will not leave the central post finger at the sticking function of the elastic bean.

Preferably, the upper protective cap is fixed on the lower protective cap through a screw(s).

Compared with the prior art, the advantageous effects of the present application are: in the present utility mode, when the central post finger is fixed by the left spherical shell and the right spherical shell in the spherical receiving cavity formed by the upper protective cap and the lower protective cap, when the central post is pulled in the central post finger to its end, under the circumstance that the whole central post is not necessary to be pulled out, the central post swings in the vertical direction at 180 degrees, which places the central post at the lower end of the tripod, easy to collapse; at the same time, since the central post can be rotated, the photographer can take photos at a low angle or a close distance, improving quality of photographing. The present application is of simple structure, easy operation, various functions and wide applicability.

### DESCRIPTION OF FIGURES

Figure 1 is a view of the structure of a central post reversion device for a tripod in the present application;
Figure 2 is a top view of the central post reversion device for a tripod in Figure 1.
Figure 3 is an exploded view of the structure of a central post reversion device for a tripod in the present application;

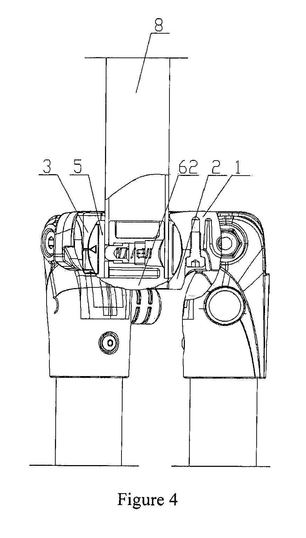

Figure 4 is a view of use status of a central post reversion device for a tripod in the present application;
Figure 5 is another view of use status of a central post reversion device for a tripod in the present application;

### EMBODIMENTS

The following is a further description of the preferable embodiments of the present application in combination with the figures.

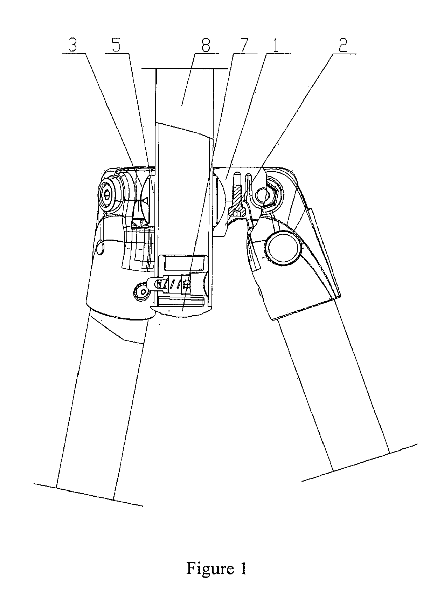

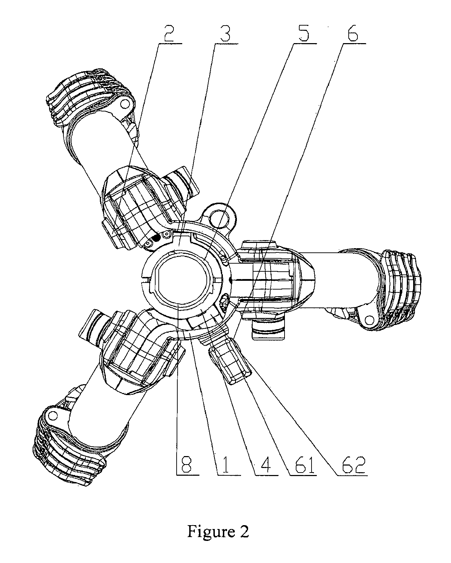

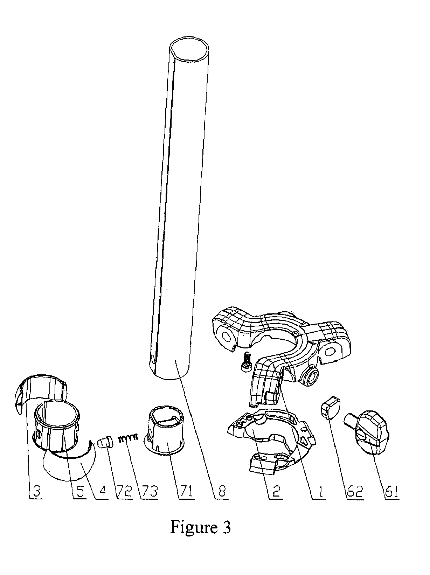

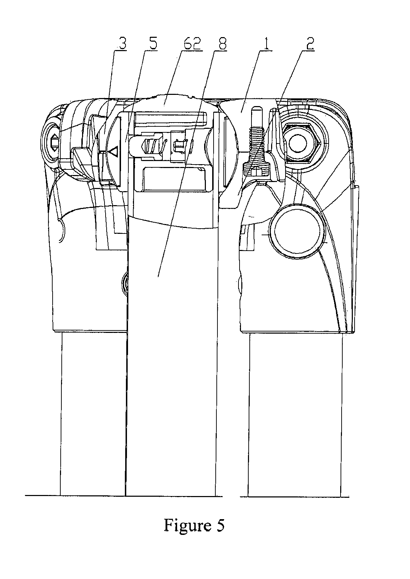

As shown in Figures 1 to 3, a central post reversion device for a tripod in this embodiment comprises a upper protective cap 1, a lower protective cap 2, a left spherical shell 3, a right spherical shell 4, a central post finger 5 used to telescope a central post 8, a locking structure 6, a limiting structure 7; the upper protective cap 1 is fixed on the lower protective cap 2 through fixing elements such as a screw, etc., to form, with the lower protective cap 2, a spherical receiving cavity with an opening; the left spherical shell 3 and the right spherical shell 4 are placed in the spherical receiving cavity symmetrically; the central post finger 5 is placed between and is fixed by the left spherical shell 3 and the right spherical shell 4; the locking structure 6 is fixed on the upper protective cap 1, with one end thereof being pressed against the left spherical shell 3 or the right spherical shell 4; the limiting structure 7 is installed at the bottom of the central post, wherein the locking structure 6 is used to fix the central post 8, so that the central post 8 cannot be pulled easily from the central post finger 5; the limiting structure 7 can prevent the drawing out of the central post 8 from the central post finger 5. In a central post reversion device for a tripod of the present embodiment, when the central post finger 5 is fixed by the left spherical shell 3 and the right spherical shell 4 in the spherical receiving cavity formed by the upper protective cap 1 and the lower protective cap 2, when the central post 8 is pulled in the central post finger 5 to its end, as shown by Figure 5, under the circumstance that the whole central post 8 is not necessarily to be pulled out, the central post 8 swings in the vertical direction at 180 degrees through the opening at the place of the upper protective cap 1 and the lower protective cap 2, as shown by Figure 5, which places the central post 8 at the lower end of the tripod, easy to collapse; at the same time, since the central post 8 can be rotated, the photographer can take a photo at a low angle or a close distance, improving the quality of photographing.

In this embodiment, the locking structure 6 can adopt the following structure: the locking structure 6 comprises a knob 61 and a central post compact 62; the central post compact 62 is placed between the upper protective cap 1 and the left spherical shell 3 or the right spherical shell 4, and is pressed on the side of the left spherical shell 3 or the right spherical shell 4; the knob 61 passes through the upper protective cap 1 and is pressed on the central post compact 62; the knob 61 is turned to adjust the force of the central post compact 62 on the left or right spherical shell to clamp or loosen the central post finger, to further fix the central post 8 in the central post finger. Of course, the locking structure can also adopt other structures, as far as it can realize the function of locking the central post.

In this embodiment, a limiting structure 7 can adopt a structure as following: the limiting structure 7 comprises a tail block 71, an elastic bean 72 and an elastic member 73; the tail block 71 is a crown block having a diameter slightly larger than that of the central post; the elastic bean 72 is a cylinder or a ball, with a small hat-shaped block; the elastic member 73 is a spring-like member; the tail block 71 is fixed at the bottom of the central post 8; the tail block 71 is arranged with a slot hole horizontally in it; the elastic member 73 is placed in the slot hole; the elastic bean 72 is stuck at the opening of the slot hole and is connected with the outer end of the elastic member 73; because the elastic bean 72 is stuck at the opening of the slot hole under the force of the elastic member, when the central post 8 is pulled from the central post finger 5 to the end, the elastic bean 72 will not be separated from the central post finger 5 under the sticking function of the elastic bean 72. When it needs to reverse the central post 8, the elastic bean can be pressed to make the same72 wholly enter into the slot hole; at this time, the central post 8 is pulled to make the tail block 71 tightly against the left spherical shell 3 and the right spherical shell 4, to form a ball shape with the two, and it can rotate in the spherical receiving cavity, enabling the central post 8 to swing in the vertical direction at 180 degree. Of course, the limiting structure 7 can also adopt other structures, as far as it can limit the central post from separating from the central post finger and is convenient to reverse the central post.

The above mentioned is only preferable embodiments in the present application, and hence it cannot define the scope of carrying out the present application, that it to say, changes and modifications of same effect according to the content described in the Claims or Description of the present application still fall into the scope covered by the Claims of the present application. In addition, the Abstract and the Title are used only for assisting the search for patent documents, rather than for limiting the scope of Claims of the present application.

## Claims

1. A central post reversion device for a tripod, **characterized by** comprising a upper protective cap, a lower protective cap, a left spherical shell and a right spherical shell and a central post finger used to telescope the central post; wherein the upper protective cap is fixed on the lower protective cap to form, with the lower protective cap, a spherical receiving cavity with an opening; wherein the left spherical shell and the right spherical shell are placed into the spherical receiving cavity symmetrically; and wherein the central post finger is placed between and fixed by the left spherical shell and the right spherical shell.

2. The central post reversion device for a tripod according to Claim 1, **characterized by** further comprising a locking structure that is fixed on the upper protective cap, with one end thereof being pressed against the left spherical shell or the right spherical shell.

3. The central post reversion device for a tripod according to Claim 2, **characterized in that** the locking structure comprises a knob and a central post compact; wherein the central post compact is placed between the upper protective cap and the left spherical shell or the right spherical shell, and is pressed on the side of the left spherical shell or the right spherical shell; and wherein the knob passes through the upper protective cap and is pressed on the central post compact.

4. The central post reversion device for a tripod according to any one of Claims 1-3, **characterized by** further comprising a limiting structure that is installed at the bottom of the central post.

5. The central post reversion device for a tripod according to Claim 4, **characterized in that** the limiting structure further comprises a tail block, an elastic bean and an elastic member, wherein the tail block is fixed at the bottom of the central post; wherein the tail block is arranged with a slot hole horizontally in it; wherein the elastic member is placed in the slot hole; wherein the elastic bean is stuck at the opening of the slot hole and is connected with the outer end of the elastic member.

6. The central post reversion device for a tripod according to any one of Claims 1-3, **characterized in that** the protective upper cap is fixed on the lower protective cap through a screw(s).
